# EUROPEAN PATENT SPECIFICATION

(11) **EP 0 499 596 B1**
(45) Date of publication and mention of the grant of the patent: **26.10.1994**
(21) Application number: 92850026.3
(22) Date of filing: 10.02.1992
(51) Int. Cl.: A47J 43/28

(54) **An invention for automatic feeding out of dishes from pot and pans**
Gerät zum Ausnehmen von Portionen aus einem Topf oder einer Pfanne
Dispositif pour enlever de la matière d'un pot ou d'une poêle

(30) Priority: 11.02.1991 SE 9100399
(43) Date of publication of application: 19.08.1992
(73) Proprietor: Persson, Göran, S-421 77 Västra Frölunda (SE)
(72) Inventor: Persson, Göran, S-421 77 Västra Frölunda (SE)
(74) Representative: Roth, Ernst Adolf Michael

(56) References cited:
- BE-A- 678 449
- DE-C- 187 661
- US-A- 3 332 107
- US-A- 3 994 522

## Description

### Technical field

Device for automatic output of stews, and the like dishes from large cooking-utensil

### The background of the invention

Preparation of institutional kitchen food takes place in great food processing vessel with volumes of up to several hundred litre. Liquid and similar to pasta dishes as soup, gruel, porridge, mash etc. can be pumped out from the vessel while dishes which contain solid constituent for example stews of different types, do not stand such a inclement treatment without an appreciable deterioration of the consistency being obtained.

The purpose of the invention and most important characteristics:
The purpose with the invention is to provide an output device for the later type of dishes, which device is kind to the dish and not in appreciable extent impairs its consistency. According to the invention this has been achieved by an output tube immerseable in a vessel, a slidable piston being received in said tube said piston being displaceable in an up and down direction by means of a driving device, the piston being hollow and provided with apertures at its lower and upper ends, whereby the lower aperture is closeable by means of a valve arranged in such a way that in the downward motion said piston is open and in the ascendant motion it is closed, so that the piston in its ascendant motion carries substance to be contained in the vessel through the output tube.

The subject-matter of dependent claim 2 concerns further particular embodiments.

### Description of the drawings

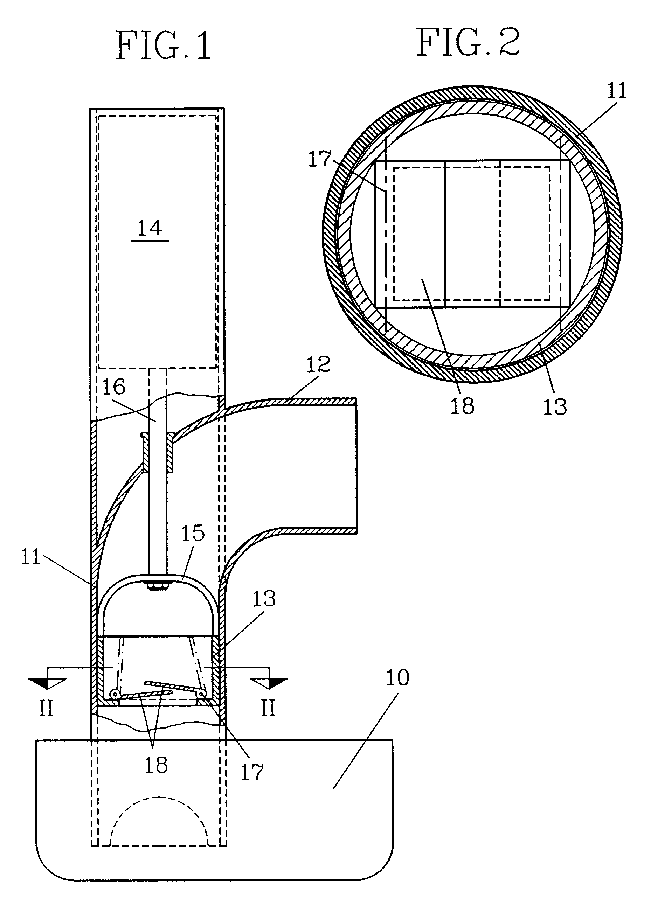

An embodiment of the invention is shown in the enclosed drawing, where
Fig. 1 is a vertical section through a device according to the invention located in a vessel.
Fig. 2 is a section according to the line II-II in fig. 1.

### Description of an embodiment

The device, which is placed in a cooking-utensil 10 includes a tube 11, which contains an output nozzle 12 which is bent to an essentially horisontal direction. In the vertical part of the tube 11 13 is slidably received, a piston, which by means of a motor 14 arranged outside the vessel 10 can be conveyed in a reciprocating motion. The piston 13 is hollow as a tube and is by means of a clamp 15 connected to the piston rod 16. The lower opening of the piston is closeable by means of a valve including a pair of flaps 18 turnable about hinges 17. These are preferably spring loaded so that they at the ascendant motion of the piston fall downwards and close the lower opening of the piston, whereby the piston brings substance up towards the output nozzle 12. At the downward motion of the piston 13 the flaps are opened by the counter pressure from the substance in the vessel.

The invention is naturally not limited to the embodiment shown but a number of modifications are possible within the scope of the concept of the invention as claimed.

## Claims

1. Device for automatic output of stews, and the like dishes from large cooking-utensil,
**characterized by**
an output tube (11) immerseable in a vessel (10), a slidable piston (3) being received in said tube, said piston being displaceable in an up and down direction by means of a driving device, the piston being hollow and provided with apertures at its lower and upper ends, whereby the lower aperture is closeable by means of a valve (18) arranged in such a way that in the downward motion said piston is open and in the ascendant motion it is closed, so that the piston in its ascendant motion carries substance to be contained in the vessel (10) through the output tube (11).

2. Device according to claim 1,
**characterized by**
that the valve (18) includes a pair of spring loaded turnable flaps which are turned upwards by the counter pressure of the substance in the vessel (11) against the spring action in the downward motion of the piston (13), said flaps in the ascendant motion falling downwards and closing the lower opening of the piston (11).

## Patentansprüche

1. Gerät zum automatischen Ausgeben Von Eintopf- und ähnlichen Gerichten aus einem großen Kochgerät, gekennzeichnet durch eine in ein Gefäß (10) eintauchbare Ausgaberöhre (11), in der ein verschieblicher Kolben (13) aufgenommen ist, der mittels einer Antriebsvorrichtung nach oben und unten vertagerbar sowie hohl und an seinen unteren und oberen Enden mit Öffnungen versehen ist, wobei die untere Öffnung mittels eines Ventils (18) verschließbar ist, das so angeordnet ist, daß der Kolben bei der Abwärtsbewegung geöffnet und bei der nach oben gerichteten Bewegung geschlossen ist, so daß der Kolben bei seiner nach oben gerichteten Bewegung in dem Gefäß (10) enthaltene Substanz durch die Ausgaberöhre (11) fördert.

2. Gerät nach Anspruch 1, dadurch gekennzeichnet, daß das Ventil (18) ein Paar federbelasteter drehbarer Klappen umfaßt, die bei der Abwärtsbewegung des Kolbens (13) durch den Gegendruck der Substanz in dem Gefäß (10) gegen die Federwirkung nach oben gedreht werden, wobei die Klappen bei der nach oben gerichteten Bewegung nach unten fallen und die untere Öffnung des Kolbens (13) verschließen.

## Revendications

1. Dispositif d'extraction automatique de ragoûts et de mets analogues d'un grand ustensile de cuisine, caractérisé par un tube d'extraction (11) pouvant être plongé dans un récipient (10), un piston coulissant (13) étant logé dans ledit tube, ledit piston pouvant être déplacé dans une direction allant vers le haut et vers le bas au moyen d'un dispositif d'entraînement, le piston étant creux et pourvu d'ouvertures à ses extrémités inférieure et supérieure, l'ouverture inférieure pouvant être refermée au moyen d'un clapet (18) agencé d'une manière telle que, lors de la course descendante, ledit piston soit ouvert et que, lors de la course ascendante, il soit fermé, afin que le piston, lors de sa course ascendante, transporte, à travers le tube d'extraction (11), une substance destinée à être contenue dans le récipient (10).

2. Dispositif selon la revendication 1, caractérisé en ce que le clapet (18) comprend un couple de volets pivotants sollicités par ressorts, qui pivotent vers le haut sous l'effet de la contre-pression de la substance contenue dans le récipient (10), à l'encontre de l'action des ressorts, lors de la course descendante du piston (13), lesdits volets tombant vers le bas et refermant l'ouverture inférieure du piston (13), lors de la course ascendante.
